# FASCICULE DE BREVET EUROPEEN

(11) **EP 0 726 026 B1**
(45) Date de publication et mention de la délivrance du brevet: **19.01.2000**
(21) Numéro de dépôt: 96400858.5
(22) Date de dépôt: 01.06.1993
(51) Int. Cl.: A01F 15/08, A01F 15/10

(54) **Presse à fourrage**
Futterpresse
Fodder press

(30) Priorité: 05.06.1992 FR 9206849
(43) Date de publication de la demande: 14.08.1996
(62) Demande divisionnaire de: 93401383.0
(73) Titulaire: GREENLAND FRANCE SA., F-45803 Saint Jean de Braye (FR)
(72) Inventeur: Galant, Jean-Claude, 45100 Orleans (FR)
(74) Mandataire: Hirsch, Marc-Roger

(56) Documents cités:
- DE-B- 1 097 742
- FR-A- 2 691 873
- GB-A- 2 034 244
- US-A- 3 095 802

## Description

### Description pour les Etats contractants suivants : NL, DE

La présente invention concerne les presses à fourrage, et plus particulièrement les presses à fourrage du type à grosses balles carrées.

Il existe de nombreux modèles de presses à fourrage, adaptées au ramassage et au conditionnement des pailles et des foins. Toutes ces presses présentent certains inconvénients et n'ont donc pas un fonctionnement totalement satisfaisant.

En particulier, les presses existantes présentent souvent des dispositifs d'une grande complexité mécanique et qui sont de ce fait sujets à s'user rapidement. Ces systèmes ne permettent pas non plus toujours d'éviter des pertes sensibles en matériau à presser.

Ce problème de pertes de matériau se pose en particulier à l'alimentation de la chambre de compression, dans laquelle se forment les bottes. En effet, dans les machines connues, la chambre de compression, pour des raisons de simplicité, est le plus souvent alimentée en matériau à presser par une ouverture située sur sa paroi inférieure. Lors de l'arrivée du matériau dans la chambre de compression, et avant qu'il ne soit comprimé par le piston de celle-ci, il risque d'être entraîné par son propre poids et de retomber dans le canal d'alimentation. De ce fait, les balles peuvent présenter des défauts d'homogénéité. De plus, le matériau qui retombe peut s'accumuler et conduire dans les cas les plus graves à des bourrages du canal d'alimentation de la chambre de compression, ce qui nécessite de nouveau un arrêt de la machine pour un débourrage manuel.

Dans toutes les machines de l'art antérieur se pose donc le problème des arrêts de travail pour le débourrage, qui diminuent de façon importante le rendement.

GB-A-2 034 244 et US-A-3 095 802 décrivent une presse à fourrage à petites balles rectangulaires, qui présentent un canal d'alimentation latéral, débouchant sur un côté de la chambre de compression. Ces documents proposent de prévoir dans la chambre de compression, au dessus des ouvertures de passage des aiguilles de liage, des "chiens" permettant d'empêcher le retour en arrière du fourrage.

DE-B-10 097 742 décrit une presse à piston rotatif, et propose un système pour repousser activement le fourrage qui se trouverait dans la chambre d'alimentation au dessus des ouvertures de passage des aiguilles de liage. Le fourrage qui s'y trouve est repoussé en arrière, en sens inverse de la direction d'introduction dans la chambre de compression.

NL-A-92 00941 et DE-A-43 17 393, qui ont une date de priorité antérieure à la présente demande, mais qui sont publiés après, décrit une presse à fourrage, qui présente sur la paroi du canal d'alimentation de la chambre de compression des moyens de retenue pour empêcher que le fourrage ne glisse vers l'arrière.

La présente invention a pour but de pallier ces inconvénients de l'art antérieur ; elle fournit une presse nouvelle et sûre.

Un des avantages de la présente invention d'éviter des pertes de fourrage dans le cycle d'alimentation de la presse, qui conduit à des bottes peu homogènes.

L'invention a pour objet une presse tractée pour le ramassage et le conditionnement de fourrage en vue de l'obtention d'une balle, comprenant un dispositif de ramassage de fourrage, une chambre de compression du fourrage pour constituer une balle, un canal d'alimentation reliant ledit dispositif de ramassage à ladite chambre de compression et débouchant dans la paroi inférieure de la chambre de compression, et elle est caractérisée par un dispositif empêchant le retour dans le canal d'alimentation du fourrage passant depuis ce dernier dans la chambre de compression, le dispositif étant disposé sur la paroi de la chambre de compression adjacent au canal d'alimentation.

Selon un mode de réalisation de l'invention, le dispositif de la presse empêchant le retour du fourrage est constitué d'une pluralité de dents disposées sur la paroi de la chambre de compression adjacentes au canal d'alimentation .

Selon encore un autre mode de réalisation de l'invention, le fourrage est pressé dans la chambre de compression par le mouvement alternatif d'un piston, et les dents sont disposées dans des passages ménagés dans un piston ledit piston pour des aiguilles d'un dispositif de liage.

Dans un autre mode de réalisation de l'invention, les dents du dispositif empêchant le retour sont montées libres en rotation, pivotent lors du passage du fourrage et s'appuient sur la paroi de la chambre de compression pour empêcher le retour du fourrage dans le canal d'alimentation.

Les avantages de la présente invention ressortiront mieux de la description qui suit, donnée à titre d'exemple en référence aux figures annexées, qui montrent :
- figure 1, une vue en coupe d'ensemble d'une machine selon l'invention;
- figure 2, une vue partielle d'un système de contrôle de l'alimentation dans une presse selon l'invention;
- figure 3, une vue du piston de face de la presse selon l'invention.

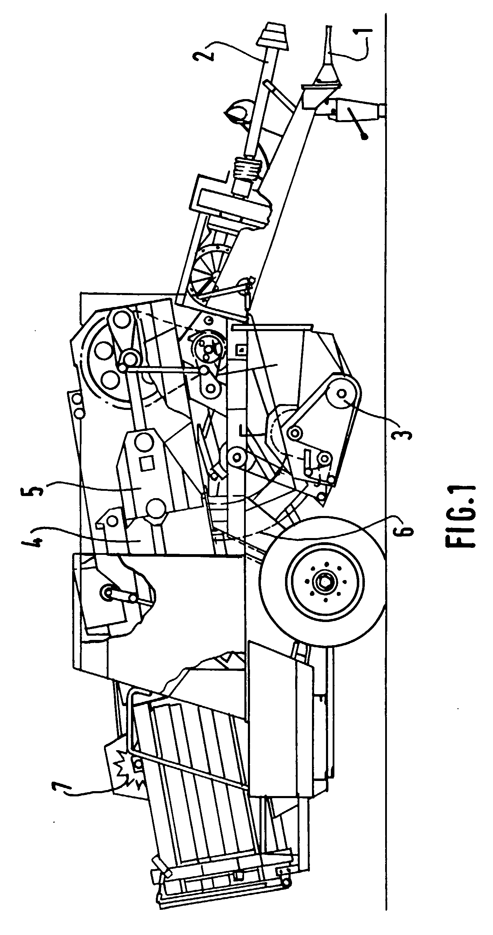

La presse selon l'invention, telle que représentée schématiquement à la figure 1, est utilisée pour le ramassage et le conditionnement du fourrage. Elle est tractée à cet effet par un véhicule du type tracteur agricole, muni d'un organe d'entraînement du type prise de force, susceptible de transmettre un couple à la presse selon l'invention. Celle-ci comprend un dispositif d'attelage 1 réglable, susceptible d'être fixé à la partie arrière d'un tracteur de type agricole, ainsi qu'un organe d'accouplement 2 grâce auquel la presse selon l'invention peut être accouplée à l'organe d'entraînement du tracteur.

La presse selon l'invention comprend un dispositif de ramassage 3 du fourrage du type appelé communément pick up, qui permet de ramasser du fourrage étalé sur le sol sous forme d'un andain. Sur la figure 1 qui représente la presse en position de transport, le dispositif de ramassage est relevé, mais sa position peut être réglée en fonction de la hauteur de l'attelage.

La presse comprend en outre une chambre de compression 4, dans laquelle le fourrage est pressé pour constituer une balle, par le mouvement alternatif d'un piston 5 qui se déplace dans la chambre et presse le matériau contre une paroi de fond amovible.

Un canal d'alimentation qui relie le dispositif de ramassage 3 et la chambre de compression alimente cette dernière en fourrage à partir du fourrage fourni par le dispositif de ramassage. On voit en pointillé sur la figure 1, le canal d'alimentation 6, qui débouche dans la paroi inférieure de la chambre de compression.

Enfin, la presse selon l'invention comprend un dispositif de liage de la balle avant son éjection. Le dispositif permet de lier la balle par une pluralité de fils, et comprend d'une part des noueurs réalisant des noeuds sur les fils, et d'autre part des aiguilles, chacune associée à un noueur, qui fait passer le fil de liage à travers les balles en cours de liage dans la chambre de compression, de façon à en faire le tour complet.

Dans la presse selon l'invention, le mouvement des aiguilles du piston est synchronisé pour permettre un liage de la balle sous la pression du piston, de façon à atteindre en sortie de machine, une pression importante, ce qui conduit à de nombreux avantages du point de vue du stockage. Grâce à la presse selon l'invention, on atteint dans des balles à grandes dimensions, des densités de fourrage importantes qui dépassent ce que permettent les dispositifs de l'art antérieur.

Le liage des balles est commandé grâce à un dispositif de mesure de la longueur de la balle, qui, dans le mode de réalisation de la figure 1, et constitué d'une roue dentée 7 entraînée en rotation du fait de la croissance de la balle dans la chambre de compression.

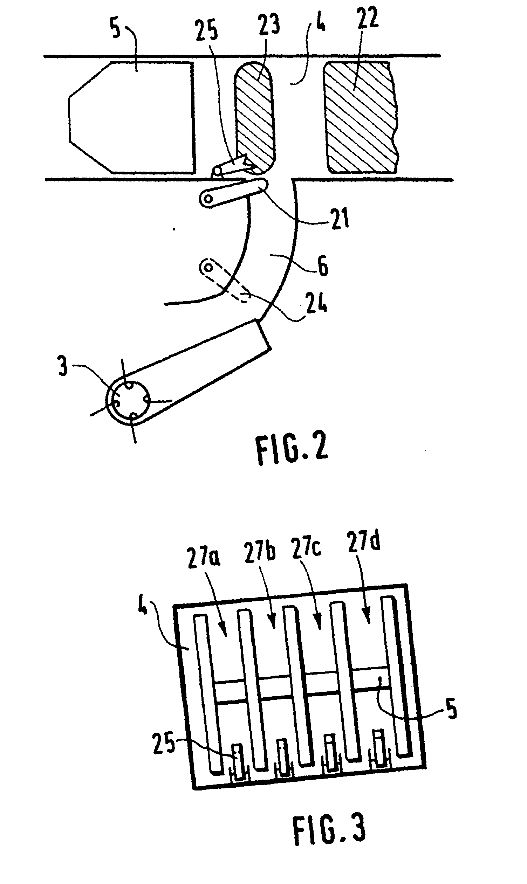

La figure 2 montre, dans la machine de la figure 1, une vue partielle schématique du contrôle de l'alimentation. Dans la presse selon l'invention, le fourrage ramassé par le dispositif de ramassage 3 s'accumule dans le canal d'alimentation 6, avant d'être transféré dans la chambre de compression 4 par le dispositif d'alimentation, dont on n'a représenté schématiquement que la partie terminale 21. On voit sur la figure 2 une balle 22 en cours de formation dans la chambre de compression. Le dispositif d'alimentation 21, lorsque le piston 5 découvre l'orifice du canal d'alimentation 6, alimente la chambre de compression de la quantité 23 de fourrage qui se trouvait dans le canal d'alimentation.

Comme le dispositif d'alimentation est animé d'un mouvement permanent entre une position extrême 21 et une position extrême 24, en début et en fin du canal d'alimentation, le fourrage 23 soulevé par le dispositif d'alimentation dans la chambre de compression 4 tend à retomber dans le canal d'alimentation, avant que le piston 5 n'avance et n'obstrue l'orifice de celui-ci. Grâce à la présence, selon l'invention, d'un système de dents escamotables, il est possible d'éviter ces types de pertes. En effet, on fixe à la paroi inférieure de la chambre de compression, au voisinage de l'orifice du canal d'alimentation, une pluralité de dents 25 mobiles librement autour d'un axe. Lors de l'alimentation du fourrage 23 depuis le canal d'alimentation dans la chambre de compression, les dents 25 sont relevées et prennent une position quasiment verticale, laissant passer le fourrage. Lorsque le dispositif 21 s'efface, le fourrage 23, sous l'effet de son poids, commence à descendre, et entraîne les dents 25, qui l'empêchent de revenir dans le canal d'alimentation.

Une fois que le piston 5 a comprimé la charge de fourrage 23, les dents 25 sont de nouveau relevées par l'alimentation d'une nouvelle charge de fourrage. Ainsi, ces dents limitent les pertes de fourrage et préviennent toute accumulation intempestive dans le canal d'alimentation.

La figure 3 représente une vue de face du piston et du système de dents 25 selon l'invention. Comme on peut le voir sur la figure 3, le piston 5 comprend une pluralité de passages verticaux 27a à 27d, qui permettent entre autres un passage des aiguilles de nouage dans la chambre de compression. Les dents 25 sont disposées dans ces passages, de façon à pouvoir se mouvoir librement quelle que soit la position du piston 5. De la sorte, les dents 25 peuvent empêcher toute descente de fourrage dans le canal d'alimentation, jusqu'à ce que le piston 5 ait pressé le fourrage et dégagé de nouveau l'orifice du canal d'alimentation.

Le fonctionnement des systèmes de dents selon l'invention est entièrement automatique, et ne nécessite aucune intervention de l'opérateur. Le système est simple et robuste, et peut être installé simplement, même sur des machines déjà existantes. Il est d'une utilité toute particulière pour les fourrages de densité élevée qui ont particulièrement tendance à retomber dans le canal d'alimentation.

### Description pour l'Etat contractant suivant : GB

La présente invention concerne les presses à fourrage, et plus particulièrement les presses à fourrage du type à grosses balles carrées.

Il existe de nombreux modèles de presses à fourrage, adaptées au ramassage et au conditionnement des pailles et des foins. Toutes ces presses présentent certains inconvénients et n'ont donc pas un fonctionnement totalement satisfaisant.

En particulier, les presses existantes présentent souvent des dispositifs d'une grande complexité mécanique et qui sont de ce fait sujets à s'user rapidement. Ces systèmes ne permettent pas non plus toujours d'éviter des pertes sensibles en matériau à presser.

Ce problème de pertes de matériau se pose en particulier à l'alimentation de la chambre de compression, dans laquelle se forment les bottes. En effet, dans les machines connues, la chambre de compression, pour des raisons de simplicité, est le plus souvent alimentée en matériau à presser par une ouverture située sur sa paroi inférieure. Lors de l'arrivée du matériau dans la chambre de compression, et avant qu'il ne soit comprimé par le piston de celle-ci, il risque d'être entraîné par son propre poids et de retomber dans le canal d'alimentation. De ce fait, les balles peuvent présenter des défauts d'homogénéité. De plus, le matériau qui retombe peut s'accumuler et conduire dans les cas les plus graves à des bourrages du canal d'alimentation de la chambre de compression, ce qui nécessite de nouveau un arrêt de la machine pour un débourrage manuel.

Dans toutes les machines de l'art antérieur se pose donc le problème des arrêts de travail pour le débourrage, qui diminuent de façon importante le rendement.

GB-A-2 034 244 et US-A-3 095 802 décrivent une presse à fourrage à petites balles rectangulaires, qui présentent un canal d'alimentation latéral, débouchant sur un côté de la chambre de compression. Ces documents proposent de prévoir dans la chambre de compression, au dessus des ouvertures de passage des aiguilles de liage, des "chiens" permettant d'empêcher le retour en arrière du fourrage.

DE-B-10 097 742 décrit une presse à piston rotatif, et propose un système pour repousser activement le fourrage qui se trouverait dans la chambre d'alimentation au dessus des ouvertures de passage des aiguilles de liage. Le fourrage qui s'y trouve est repoussé en arrière, en sens inverse de la direction d'introduction dans la chambre de compression.

NL-A-92 00941 et DE-A-43 17 393, qui ont une date de priorité antérieure à la présente demande, mais qui sont publiés après, décrit une presse à fourrage, qui présente sur la paroi du canal d'alimentation de la chambre de compression des moyens de retenue pour empêcher que le fourrage ne glisse vers l'arrière.

La présente invention a pour but de pallier ces inconvénients de l'art antérieur ; elle fournit une presse nouvelle et sûre.

Un des avantages de la présente invention d'éviter des pertes de fourrage dans le cycle d'alimentation de la presse, qui conduit à des bottes peu homogènes.

L'invention a pour objet une presse tractée pour le ramassage et le conditionnement de fourrage en vue de l'obtention d'une balle, comprenant un dispositif de ramassage de fourrage, une chambre de compression du fourrage pour constituer une balle, un canal d'alimentation reliant ledit dispositif de ramassage à ladite chambre de compression et débouchant dans la paroi inférieure de la chambre de compression, et elle est caractérisée par un dispositif empêchant le retour dans le canal d'alimentation du fourrage passant depuis ce dernier dans la chambre de compression .

Selon un mode de réalisation de l'invention, le dispositif de la presse empêchant le retour du fourrage est constitué d'une pluralité de dents disposées sur la paroi de la chambre de compression adjacentes au canal d'alimentation.

Selon encore un autre mode de réalisation de l'invention, le fourrage est pressé dans la chambre de compression par le mouvement alternatif d'un piston, et les dents sont disposées dans des passages ménagés dans un piston ledit piston pour des aiguilles d'un dispositif de liage.

Dans un autre mode de réalisation de l'invention, les dents du dispositif empêchant le retour sont montées libres en rotation, pivotent lors du passage du fourrage et s'appuient sur la paroi de la chambre de compression pour empêcher le retour du fourrage dans le canal d'alimentation.

Les avantages de la présente invention ressortiront mieux de la description qui suit, donnée à titre d'exemple en référence aux figures annexées, qui montrent :
- figure 1, une vue en coupe d'ensemble d'une machine selon l'invention;
- figure 2, une vue partielle d'un système de contrôle de l'alimentation dans une presse selon l'invention;
- figure 3, une vue du piston de face de la presse selon l'invention.

La presse selon l'invention, telle que représentée schématiquement à la figure 1, est utilisée pour le ramassage et le conditionnement du fourrage. Elle est tractée à cet effet par un véhicule du type tracteur agricole, muni d'un organe d'entraînement du type prise de force, susceptible de transmettre un couple à la presse selon l'invention. Celle-ci comprend un dispositif d'attelage 1 réglable, susceptible d'être fixé à la partie arrière d'un tracteur de type agricole, ainsi qu'un organe d'accouplement 2 grâce auquel la presse selon l'invention peut être accouplée à l'organe d'entraînement du tracteur.

La presse selon l'invention comprend un dispositif de ramassage 3 du fourrage du type appelé communément pick up, qui permet de ramasser du fourrage étalé sur le sol sous forme d'un andain. Sur la figure 1 qui représente la presse en position de transport, le dispositif de ramassage est relevé, mais sa position peut être réglée en fonction de la hauteur de l'attelage.

La presse comprend en outre une chambre de compression 4, dans laquelle le fourrage est pressé pour constituer une balle, par le mouvement alternatif d'un piston 5 qui se déplace dans la chambre et presse le matériau contre une paroi de fond amovible.

Un canal d'alimentation qui relie le dispositif de ramassage 3 et la chambre de compression alimente cette dernière en fourrage à partir du fourrage fourni par le dispositif de ramassage. On voit en pointillé sur la figure 1, le canal d'alimentation 6, qui débouche dans la paroi inférieure de la chambre de compression.

Enfin, la presse selon l'invention comprend un dispositif de liage de la balle avant son éjection. Le dispositif permet de lier la balle par une pluralité de fils, et comprend d'une part des noueurs réalisant des noeuds sur les fils, et d'autre part des aiguilles, chacune associée à un noueur, qui fait passer le fil de liage à travers les balles en cours de liage dans la chambre de compression, de façon à en faire le tour complet.

Dans la presse selon l'invention, le mouvement des aiguilles du piston est synchronisé pour permettre un liage de la balle sous la pression du piston, de façon à atteindre en sortie de machine, une pression importante, ce qui conduit à de nombreux avantages du point de vue du stockage. Grâce à la presse selon l'invention, on atteint dans des balles à grandes dimensions, des densités de fourrage importantes qui dépassent ce que permettent les dispositifs de l'art antérieur.

Le liage des balles est commandé grâce à un dispositif de mesure de la longueur de la balle, qui, dans le mode de réalisation de la figure 1, et constitué d'une roue dentée 7 entraînée en rotation du fait de la croissance de la balle dans la chambre de compression.

La figure 2 montre, dans la machine de la figure 1, une vue partielle schématique du contrôle de l'alimentation. Dans la presse selon l'invention, le fourrage ramassé par le dispositif de ramassage 3 s'accumule dans le canal d'alimentation 6, avant d'être transféré dans la chambre de compression 4 par le dispositif d'alimentation, dont on n'a représenté schématiquement que la partie terminale 21. On voit sur la figure 2 une balle 22 en cours de formation dans la chambre de compression. Le dispositif d'alimentation 21, lorsque le piston 5 découvre l'orifice du canal d'alimentation 6, alimente la chambre de compression de la quantité 23 de fourrage qui se trouvait dans le canal d'alimentation.

Comme le dispositif d'alimentation est animé d'un mouvement permanent entre une position extrême 21 et une position extrême 24, en début et en fin du canal d'alimentation, le fourrage 23 soulevé par le dispositif d'alimentation dans la chambre de compression 4 tend à retomber dans le canal d'alimentation, avant que le piston 5 n'avance et n'obstrue l'orifice de celui-ci. Grâce à la présence, selon l'invention, d'un système de dents escamotables, il est possible d'éviter ces types de pertes. En effet, on fixe à la paroi inférieure de la chambre de compression, au voisinage de l'orifice du canal d'alimentation, une pluralité de dents 25 mobiles librement autour d'un axe. Lors de l'alimentation du fourrage 23 depuis le canal d'alimentation dans la chambre de compression, les dents 25 sont relevées et prennent une position quasiment verticale, laissant passer le fourrage. Lorsque le dispositif 21 s'efface, le fourrage 23, sous l'effet de son poids, commence à descendre, et entraîne les dents 25, qui l'empêchent de revenir dans le canal d'alimentation.

Une fois que le piston 5 a comprimé la charge de fourrage 23, les dents 25 sont de nouveau relevées par l'alimentation d'une nouvelle charge de fourrage. Ainsi, ces dents limitent les pertes de fourrage et préviennent toute accumulation intempestive dans le canal d'alimentation.

La figure 3 représente une vue de face du piston et du système de dents 25 selon l'invention. Comme on peut le voir sur la figure 3, le piston 5 comprend une pluralité de passages verticaux 27a à 27d, qui permettent entre autres un passage des aiguilles de nouage dans la chambre de compression. Les dents 25 sont disposées dans ces passages, de façon à pouvoir se mouvoir librement quelle que soit la position du piston 5. De la sorte, les dents 25 peuvent empêcher toute descente de fourrage dans le canal d'alimentation, jusqu'à ce que le piston 5 ait pressé le fourrage et dégagé de nouveau l'orifice du canal d'alimentation.

Le fonctionnement des systèmes de dents selon l'invention est entièrement automatique, et ne nécessite aucune intervention de l'opérateur. Le système est simple et robuste, et peut être installé simplement, même sur des machines déjà existantes. Il est d'une utilité toute particulière pour les fourrages de densité élevée qui ont particulièrement tendance à retomber dans le canal d'alimentation.

## Revendications (Revendications pour l'(les) Etat(s) contractant(s) suivant(s): NL, DE)

1. Presse pour le ramassage et le conditionnement de fourrage en vue de l'obtention d'une balle, comprenant un dispositif de ramassage de fourrage (3), une chambre de compression (4) du fourrage pour constituer une balle, un canal d'alimentation (6) reliant ledit dispositif de ramassage (3) à ladite chambre de compression (4) et débouchant dans la paroi inférieure de la chambre de compression, caractérisée par un dispositif empêchant le retour dans le canal d'alimentation (6) du fourrage passant depuis ce dernier dans la chambre de compression (4), le dispositif étant disposé sur la paroi de la chambre de compression (4) adjacent au canal d'alimentation (6).

2. Presse selon la revendication 1, caractérisée en ce que ledit dispositif empêchant le retour du fourrage est constitué d'une pluralité de dents (25).

3. Presse selon la revendication 2, caractérisée en ce que le fourrage est pressé dans la chambre de compression (4) par le mouvement alternatif d'un piston (5), et en ce que lesdites dents (25) sont disposées dans des passages ménagés dans ledit piston (5) pour des aiguilles d'un dispositif de liage.

4. Presse selon la revendication 2 ou 3, caractérisée en ce que lesdites dents sont montées libres en rotation, pivotent lors du passage du fourrage et s'appuient sur la paroi de la chambre de compression pour empêcher le retour du fourrage dans le canal d'alimentation.

## Revendications (Revendications pour l'(les) Etat(s) contractant(s) suivant(s): GB)

1. Presse pour le ramassage et le conditionnement de fourrage en vue de l'obtention d'une balle, comprenant un dispositif de ramassage de fourrage (3), une chambre de compression (4) du fourrage pour constituer une balle, un canal d'alimentation (6) reliant ledit dispositif de ramassage (3) à ladite chambre de compression (4) et débouchant dans la paroi inférieure de la chambre de compression, caractérisée par un dispositif empêchant le retour dans le canal d'alimentation (6) du fourrage passant depuis ce dernier dans la chambre de compression (4).

2. Presse selon la revendication 1, caractérisée en ce que ledit dispositif empêchant le retour du fourrage est constitué d'une pluralité de dents (25), disposées sur la paroi de la chambre de compression (4) adjacentes au canal d'alimentation (6)

3. Presse selon la revendication 2, caractérisée en ce que le fourrage est pressé dans la chambre de compression (4) par le mouvement alternatif d'un piston (5), et en ce que lesdites dents (25) sont disposées dans des passages ménagés dans ledit piston (5) pour des aiguilles d'un dispositif de liage.

4. Presse selon la revendication 2 ou 3, caractérisée en ce que lesdites dents sont montées libres en rotation, pivotent lors du passage du fourrage et s'appuient sur la paroi de la chambre de compression pour empêcher le retour du fourrage dans le canal d'alimentation.

## Patentansprüche (Patentansprüche für folgende(n) Vertragsstaat(en): NL, DE)

1. Presse für das Aufsammeln und Packen von Futter zum Erzeugen eines Ballens, umfassend eine Futteraufsammelvorrichtung (3), eine Futterverdichtungskammer (4) zur Bildung eines Ballens, einen die Futteraulsammelvorrichtung (3) mit der Futterverdichtungskammer (4) verbindenden Zuführungskanal (6), der in der unteren Wand der Verdichtungskammer mündet, gekennzeichnet durch eine Vorrichtung, welche den Rücklauf des von der Verdichtungskammer (4) in den Futterzuführungskanal (6) eintretenden Futters in letzteren verhindert, wobei die Vorrichtung an der Wand der Verdichtungskammer (4) nahe des Zuführungskanals (6) angebracht ist.

2. Presse gemäß Anspruch 1, gekennzeichnet dadurch, daß die Vorrichtung, welche den Rücklauf des Futters in den Futterzuführungskanal (6) verhindert, aus einer Mehrzahl von Zinken (25) besteht.

3. Presse gemäß Anspruch 2, gekennzeichnet dadurch, daß das Futter durch die Hin-und Herbewegung eines Kolbens (5) in die Verdichtungskammer gepreßt wird, und dadurch, daß die Zinken (25) in den für die Nadeln einer Bindevorrichtung im Kolben (5) ausgesparten Durchgängen angebracht sind.

4. Presse gemäß Anspruch 2 oder 3, gekennzeichnet dadurch, daß die Zinken frei drehbar angebracht sind, beim Durchgang des Futters ausschwenken und auf der Wand der Verdichtungskammer aufliegen, um den Rücklauf des Futters in den Zuführungskanal zu verhindern.

## Patentansprüche (Patentansprüche für folgende(n) Vertragsstaat(en): GB)

1. Presse für das Aufsammeln und Packen von Futter zum Erzeugen eines Ballens, umfassend eine Futteraufsammelvorrichtung (3), eine Futterverdichtungskammer (4) zur Bildung eines Ballens, einen die Futteraufsammelvorrichtung (3) mit der Futterverdichtungskammer (4) verbindenden Zuführungskanal (6), der in der unteren Wand der Verdichtungskammer mündet, gekennzeichnet durch eine Vorrichtung, welche den Rücklauf des von der Verdichtungskammer (4) in den Futterzuführungskanal (6) eintretenden Futters in letzteren verhindert.

2. Presse gemäß Anspruch 1, gekennzeichnet dadurch, daß die Vorrichtung, welche den Rücklauf des Futters in den Futterzuführungskanal (6) verhindert, aus einer Mehrzahl von Zinken (25) besteht, die an der Wand der Verdichtungskammer (4) nahe des Zuführungskanals (6) angebracht sind.

3. Presse gemäß Anspruch 2, gekennzeichnet dadurch, daß das Futter durch die Hin-und Herbewegung eines Kolbens (5) in die Verdichtungskammer gepreßt wird, und dadurch, daß die Zinken (25) in den für die Nadeln einer Bindevorrichtung im Kolben (5) ausgesparten Durchgängen angebracht sind. .

4. Presse gemäß Anspruch 2 oder 3, gekennzeichnet dadurch, daß die Zinken drehbar angebracht sind, beim Durchlauf des Futters ausschwenken und auf der Wand der Verdichtungskammer aufliegen, um den Rücklauf des Futters in den Zuführungskanal zu verhindern.

## Claims (Claims for the following Contracting State(s): NL, DE)

1. A baler for picking up and packing fodder to form a bale, comprising a fodder pick-up device (3), a compression chamber (4) for the fodder for forming a bale, a feed channel (6) linking said pick-up device (3) to said compression chamber (4) and terminating in the lower wall of the said compression chamber, characterised by a device preventing fodder returning into the feed channel (6) during its passage therefrom into the compression chamber (4), said device being provided on the wall of the said compression chamber (4) adjacent to the feed channel (6).

2. A baler according to claim 1, characterized in that said device preventing the return of fodder consists of a plurality of teeth (25).

3. A baler according to claim 2, characterised in that the fodder is compressed in said compression chamber (4) by the alternating movement of a piston (5), and in that said teeth (25) are arranged in the passages provided in said piston (5) for the needles of a binding device.

4. The baler according to claim 2 or 3, characterised in that said teeth are mounted freely in rotation, pivot during passage of the fodder and abut against the wall of a compression chamber to prevent fodder returning into the feed channel.

## Claims (Claims for the following Contracting State(s): GB)

1. A baler for picking up and packing fodder to form a bale, comprising a fodder pick-up device (3), a compression chamber (4) for the fodder for forming a bale, a feed channel (6) linking said pick-up device (3) to said compression chamber (4) and terminating in the lower wall of the said compression chamber, characterised by a device preventing fodder returning into the feed channel (6) during its passage therefrom into the compression chamber (4).

2. A baler according to claim 1, characterized in that said device preventing the return of fodder consists of a plurality of teeth (25) provided on the wall of the said compression chamber (4) adjacent to the feed channel (6).

3. A baler according to claim 2, characterised in that the fodder is compressed in said compression chamber (4) by the alternating movement of a piston (5), and in that said teeth (25) are arranged in the passages provided in said piston (5) for the needles of a binding device.

4. The baler according to claim 2 or 3, characterised in that said teeth are mounted freely in rotation, pivot during passage of the fodder and abut against the wall of a compression chamber to prevent fodder returning into the feed channel.
